## Europäisches Patentamt

(19) **European Patent Office**

**Office européen des brevets**

(11) Numéro de publication: **0 045 669**
**B1**

(12) **FASCICULE DE BREVET EUROPEEN**

(45) Date de publication du fascicule du brevet:
**01.02.84**

(21) Numéro de dépôt: **81400871.0**

(22) Date de dépôt: **29.05.81**

(51) Int. Cl.³: **F 02 B 41/04,** F 01 L 1/08,
F 02 B 29/08

---

(54) Procédé de fonctionnement d'un moteur à combustion interne à expansion prolongée avec suralimentation relative.

---

(30) Priorité: **04.06.80 FR 8012396**

(43) Date de publication de la demande:
**10.02.82 Bulletin 82/6**

(45) Mention de la délivrance du brevet:
**01.02.84 Bulletin 84/5**

(84) Etats contractants désignés:
**DE FR GB IT**

(56) Documents cités:
**FR - A - 656 199**
**FR - A - 1 567 829**
**FR - A - 2 407 346**
**FR - A - 2 418 332**
**FR - E - 59 509**
**US - A - 1 610 888**
**US - A - 2 647 500**

(73) Titulaire: **Durand, Georges, "Horizon"-Lotissement Segonne, F-31250 REVEL-ST-FERREOL (FR)**

(72) Inventeur: **Durand, Georges, "Horizon"-Lotissement Segonne, F-31250 REVEL-ST-FERREOL (FR)**

---

BUNDESDRUCKEREI BERLIN

Procédé de fonctionnement d'un moteur à combustion interne à expansion prolongée
avec suralimentation relative

L'invention consiste en une modification permettant d'obtenir un meilleur rendement en combinant les effets d'une sous alimentation par un retard à la fermeture d'admission avec une suralimentation progressive en fin de phase d'admission au moyen d'un laminage contrôlé.

Jusqu'à présent, le procédé connu depuis longtemps utilisant le retard à la fermeture d'admission pour obtenir une réduction du volume comprimé en conservant le même volume absolu de détente (ce qui donne un allongement relatif de la détente) n'a été suivi que de réalisations pratiques très limitées en raison des perturbations incontrôlables du fonctionnement de l'admission et surtout d'une importante perte de puissance notamment à plein régime. Toutefois, et dans tous les cas, au moment de l'allumage, la pression atteinte est comparable à celle d'un moteur normal; il suffit pour cela de réduire dans les mêmes proportions le volume de la chambre d'explosion pour retrouver un rapport volumétrique de valeur habituelle.

Des exemples de tels procédés sont décrits dans les publications FR-A-656 199, FR-A-2 407 346, US-A-1 610 888.

Le procédé selon l'invention, permet d'obtenir d'importantes améliorations de rendement sans subir les inconvénients ci-dessus exposés. En premier temps on provoque une sous alimentation du moteur sans freiner son fonctionnement; cet effet s'obtient par une dépression accentuée au point mort bas. En deuxième temps, après le passage au point mort bas, l'admission reste à peine entr'ouverte laissant refluer une faible fuite jusqu'à ce que sa fermeture soit effective. En raison du retard ainsi introduit dans la fermeture de l'admission, le volume retenu pour être comprimé est considérablement plus faible que celui d'un moteur au fonctionnement normal; de l'ordre de la moitié et même sensiblement moins à bas régime.

Vers la fin de la période d'admission et en raison de la viscosité de l'air, la faible fuite précédemment décrite diminue très vite au fur et à mesure que le moteur monte en régime, ce qui provoque une suralimentation progressive.

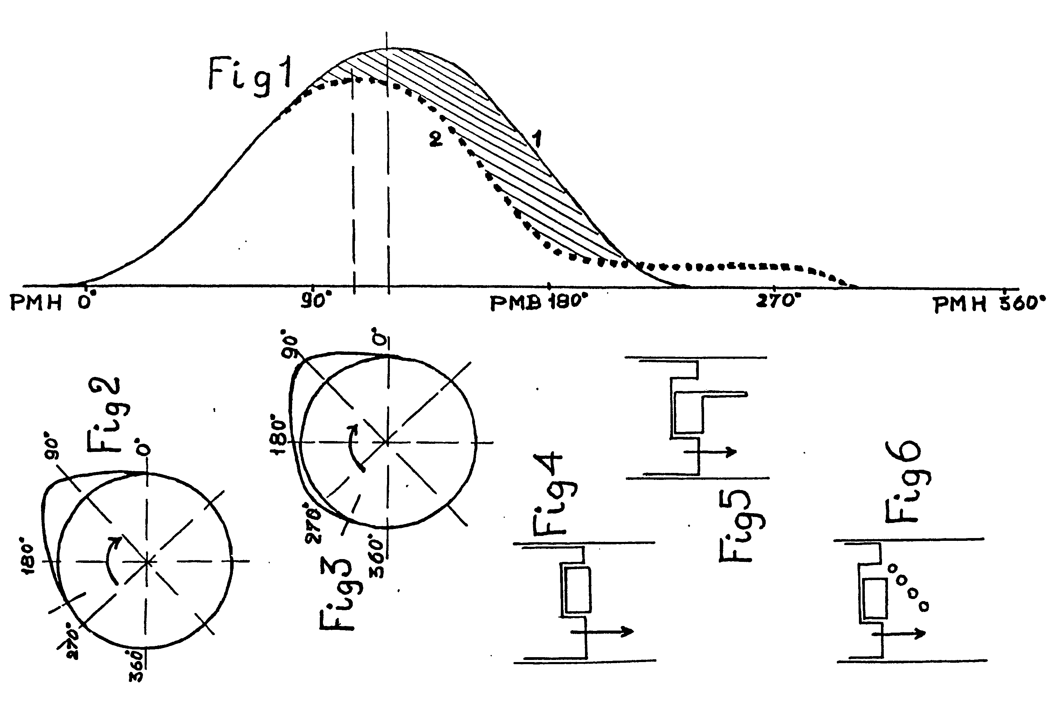

Ce fonctionnement très caractéristique de l'admission comparativement à ce qui se passe dans un moteur normal est représenté dans l'exemple d'un moteur à 4 temps par les diagrammes d'ouverture d'admission figurant sur la planche unique ci-jointe (fig. 1).

En abcise sont portés les déplacements angulaires en degrés de l'arbre moteur et en ordonnée la levée de la soupape d'admission

— le tracé 1 correspond à l'admission d'un moteur normal
— le tracé 2 correspond à l'admission d'un moteur modifié suivant l'invention.

Avec ce procédé, dans l'exemple d'un moteur à 4 temps (fig. 1) le fonctionnement de l'admission est le suivant:

— un début d'ouverture sensiblement inchangé par rapport à un moteur normal mais un maximum de levée légèrement moindre en moyenne.
— une fermeture partielle intervenant un peu plus tôt que dans le cas normal provoquant un certain déficit d'alimentation; mais l'achèvement de la fermeture est retardée pendant la remontée de piston jusqu'au point choisi pour la nouvelle définition volumétrique avant le commencement de la phase effective de compression.

La surface hachurée représente le déficit volumétrique d'alimentation entre un moteur normal et un moteur modifié; on voit que ce déficit ne prend de l'importance que vers le point mort bas alors que le couple est pratiquement nul et n'entraine donc aucun freinage du moteur.

— une fermeture définitive précédée d'une phase de maintien en position entr'ouverte de la soupape d'admission laissant subsister une certaine fuite de refoulement pendant la remontée du piston, fuite dont l'importance décroit très vite en raison de la viscosité de l'air, au fur et à mesure que le moteur monte en régime, produisant ainsi une suralimentation progressive.

Les modifications à opérer sur un moteur normal pour le transformer suivant l'invention peuvent se résumer ainsi:

Dans le cas d'un moteur à 4 temps à explosion ou diesel, le profil des cames d'admission est modifié comme indiqué sur la planche unique ci-jointe (fig. 2 profil normal, fig. 3 profil modifié suivant l'invention), c'est à dire que la rampe d'ouverture est pratiquement inchangée alors que la courbe de fermeture est décalée en avance et se termine par un raccordement qui est presque un arc de cercle concentrique à l'arbre à came et d'un rayon à peine supérieur au rayon minimum de la came, permettant ainsi le maintien de la soupape en position de très faible ouverture à la fin de la phase d'admission. Cette dernière portion de la courbe de la came correspond à la fuite de refoulement contrôlé pendant la remontée du piston pour provoquer le phénomène recherché de suralimentation progressive au fur et à mesure que le moteur monte en régime.

Dans le cas d'un moteur à 2 temps (à explosion ou diesel) les lumières d'admission sont modifiées comme indiqué sur la planche unique ci-jointe (fig. 4 lumière d'admission normale, fig. 5 et 6 lumières modifiées suivant l'invention) c'est à dire que la section de la lumière d'admission est d'abord diminuée pour engendrer globalement un déficit d'air frais puis elle est prolongée en direction du pied de bielle soit par une fente très étroite parallèle à l'axe du cylindre, soit par un ou plusieurs petits orifices qui ne sont obturés que lorsque le piston a déjà parcouru une bonne part de sa course descendante en retardant d'autant le début de la compression dans le carter.

Ainsi, à bas régime, l'air admis est partiellement refoulé à travers la fente longitudinale ou le ou les petits orifices complémentaires jusqu'à ce que la position extrême de la fente ou du dernier orifice définisse un nouveau volume réduit d'air d'admission. Au fur et à mesure que le moteur monte en régime et en raison de la viscosité de l'air, la fuite de refoulement diminue très rapidement ce qui provoque la suralimentation progressive recherchée.

Enfin, il est nécessaire d'opérer un ensemble d'adaptations plutôt que des transformations proprement dites concernant:

— l'alimentation en carburant; il faudra un carburateur adapté à la nouvelle définition réduite du volume d'admission; mais il faut aussi remarquer que l'injection surtout directe est bien préférable au carburateur beaucoup trop sensible aux fluctuations des dépressions et mal adapté aux trop grandes variations de débit.

— les tubulures d'admission et d'échappement, car les volumes gazeux sont moindres, surtout à bas régime et les refoulements partiels one doivent pas trop pertuber l'écoulement d'air frais.

Les principaux avantages de ce procédé peuvent se résumer ainsi:

— le déficit relatif de l'alimentation provoqué par la réduction du volume d'air frais n'entraine aucun freinage supplémentaire puisque la dépression ne devient importante qu'au point mort bas, et même dans la remontée du piston elle agit un tout petit peu dans un sens favorable.

— la suralimentation en fin de période d'admission est très progressive en fonction de la vitesse du moteur et de l'ouverture du papillon, même à régime moyen, elle reste donc parfaitement contrôlable.

— la combustion est améliorée par l'allongement relatif de la détente, le moteur devient donc à la fois beaucoup moins polluant et bruyant.

— la température moyenne de fonctionnement est abaissée en conséquence d'un meilleur rendement thermodynamique, ce qui est favorable à la longévité des organes.

— toutes les transformations et adaptations permettant la mise en oeuvre de ce procédé sont suffisamment simples pour être réalisables sur tous les moteurs actuels et avec les moyens industriels déjà existants.

Enfin, le résultat global de la mise en oeuvre de ce procédé, dont le coût est relativement modeste, est qu'il permet d'obtenir à la fois un gain considérable de rendement à l'utilisation (surtout dans les cas de régimes très variables où il peut doubler ou presque) et une sensible augmentation de la puissance maximum.

En conclusion, ce procédé pourrait bénéficier d'un démarrage industriel très rapide et permettrait d'atteindre des résultats économiques extrêmement intéressants.

**Revendications**

1. Procédé de fonctionnement d'un moteur à combustion interne qui, par une modulation appropriée de la commande des ouvertures d'admission entraine un déficit d'alimentation résultant d'une dépression accentuée au voisinage du point mort bas et d'une fermeture retardée de l'admission, la pression en fin de compression étant rétablie par une diminution corrélative de la chambre d'explosion, caractérisé en ce que le début de la compression est remplacé pendant le prolongement de l'admission par une phase de laminage contrôlé telle que la fuite et le refoulement résultant diminuent très vite en raison inverse de la vitesse provoquant ainsi une suralimentation progressive du moteur.

2. Le procédé suivant la revendication 1 est, dans le cas des moteurs à 4 temps à explosion ou diesel, caractérisé par la forme particulière du profil des cames d'admission (fig. 3) pour obtenir le fonctionnement qui vient d'être décrit dans la revendication 1, c'est à dire par un bossage d'ouverture maximum plus faible, une rampe de fermeture plus rapide et surtout prolongée avant la fermeture par une courbe de raccordement très proche d'un arc de cercle concentrique à l'arbre à came et d'un rayon à peine supérieur au rayon minimum de la came.

3. Le procédé suivant la revendication 1 est, dans le cas des moteurs à 2 temps à explosion ou diesel caractérisé par la forme particulière des orifices d'admission (fig. 5 et 6) pour obtenir le fonctionnement qui vient d'être décrit dans la revendication 1 c'est à dire par des lumières de sections plus faibles et complétées en direction du pied de bielle soit par une fente parallèle à l'axe du piston, soit par un ou plusieurs petits orifices servant au refoulement dont la position retarde d'autant la fermeture de l'admission et dont la dimension permet une fuite d'autant plus faible que le régime du moteur augmente produisant ainsi une relative suralimentation.

**Patentansprüche**

1. Arbeitsverfahren eines Motors mit innerer Verbrennung, in welchem durch eine entsprechende Steuerung der Einlaßöffnungen ein Versorgungsdefizit resultierend aus einem betonten Druckverlust in der Nähe des niedrigen toten Punktes und eine verspätete Einlaßschließung entstehen, wobei der Druck am Ende der Verdichtung durch eine korrelative Verringerung der Verbrennungskammer ausgeglichen wird, und dadurch gekennzeichnet, daß der Verdichtungsbeginn während der Einlaßverlängerung durch eine kontrollierte Walzphase ersetzt wird, so daß das entstandene Lecken und die entstandene Verdrängung entgegengesetzt zu der Geschwindigkeit sehr schnell abnehmen, so daß eine kontinuierliche Aufladung des Motors stattfindet.

2. Verfahren nach Anspruch 1 ist im Falle von 4-Takt oder Diesel-Motoren durch eine besondere Form des Profils der Einsatznocken (Bild 3) gekennzeichnet, um eine Funktionsfähigkeit wie in Anspruch 1 beschrieben zu erhalten, das heißt durch einen geringeren maximalen Nockenanlauf, eine schnellere Brennstoffschließung, die vor allen Dingen verlängert ist vor dem Verschluß, durch eine Anschlußkurve, die sehr nahe einem der Nockenwelle konzentrischen Kreisbogen ist, und durch einen Radius, der nicht viel größer als der maximale Radius der Welle ist.

3. Verfahren nach Anspruch 1 ist im Falle von 2-Takt oder Diesel-Motoren durch eine besondere Form der Zulassungsöffnung gekennzeichnet (Bild 5 und 6), um die nach Anspruch 1 beschriebene Funktionsfähigkeit zu erhalten, daß heißt durch kleinere Öffnungen und am Fuß des Pleuels vervollständigt durch entweder einen der Kolbenachse parallelen Schlitz oder mehrere kleinere Öffnungen der Verdrängung dienend, so daß die Position dementsprechend den Zulassungsverschluß verzögert und die Dimensionen ein derart kleines Lecken verursacht, daß die Motordrehzahl sich erhöht und somit eine relative Aufladung erzeugt wird.

**Claims**

1. Method and means of operating an internal combustion engine which, by appropriate modulation of the control of the intake openings, produces an intake deficiency resulting from: a) increased depression in the vicinity of the bottom dead center and (b) delayed cut off of the intake, with restoration of pressure at the end of compression through a correlative decrease in the volume of the explosion chamber. Characteristic of this phase is that while intake is prolonged, compression is replaced by adjustable lamination, in such a way that the resulting leakage and discharge decrease very rapidly in inverse ratio to engine speed, thereby bringing about gradual supercharging of the engine.

2. The process which implements claim 1, in 4 stroke explosion or diesel engines, is characterized by the particular form of the profile of the inlet cams (fig. 1) in order to achieve the running which has been described in claim 1, i. e. by means of a smaller maximum cam lobe opening, a faster-action cut-off assembly and, especially, prolonged before cut-off by a connecting-rod curve which is very close to the arc of a circle concentric to the camshaft and whose radius is scarcely greater than the minimum radius of the cam.

3. The process which implements claim 1, in 2-stroke explosion or diesel engines, is characterized by the particular form of the intake openings (fig. 5 and 6) in order to achieve the running which has been described in claim 1, i. c. by means of smaller port cross-sections which are completed in the direction of the small end of the connecting rod, either by means of a slit parallel to the piston axis or by means of one or several small openings for discharge, the position of which is such that it delays intake cut-off and the dimensions of which make for a leaking which is the slower as the engine speed increases, thereby producing a relative supercharge.

Fig 1

PMH 0°    90°    PMB 180°    270°    PMH 360°

1

2

Fig 2

0°    90°    180°    270°    360°

Fig 3

0°    90°    180°    270°    360°

Fig 4

Fig 5

Fig 6